# EUROPÄISCHE PATENTSCHRIFT

(11) **EP 1 538 332 B1**
(45) Veröffentlichungstag und Bekanntmachung des Hinweises auf die Patenterteilung: **03.08.2016**
(21) Anmeldenummer: 04028311.1
(22) Anmeldetag: 30.11.2004
(51) Int. Cl.: F16H 57/08, F16H 57/023, F03D 15/00

(54) **Windenergieanlage**
Wind turbine
Eolienne

(30) Priorität: 03.12.2003 DE 10357026
(43) Veröffentlichungstag der Anmeldung: 08.06.2005
(73) Patentinhaber: Senvion GmbH, 22297 Hamburg (DE)
(72) Erfinder: Quell, Peter, 24783 Osterrönfeld (DE)
(74) Vertreter: Glawe, Delfs, Moll

(56) Entgegenhaltungen:
- AT-B- 403 310
- DE-A1- 10 043 593
- DE-U1- 29 609 794
- JP-U- 63 195 146

## Beschreibung

Die vorliegende Erfindung betrifft eine Windenergieanlage mit einem Rotor, der über eine hohle Rotorwelle mit einem Getriebe gekoppelt ist, das in Antriebsverbindung mit einem Generator steht.

Bei gattungsgemäßen Windenergieanlagen kann das Getriebe einstufig oder auch mehrstufig ausgebildet sein, wobei das Getriebe mindestens eine Planetenstufe aufweist. Eine Planetenstufe besteht im allgemeinen aus einem Sonnenrad um das mehrere, mit dem Sonnenrad kämmende Planetenräder angeordnet sind, wobei die Planetenräder in einem Planetenradträger gelagert sind. Das Sonnenrad, die Planetenräder und Teile des Planetenradträgers sind von einem Hohlrad umgeben, wobei das Hohlrad so ausgebildet ist, dass es mit den Planetenrädern kämmt. Entsprechend der gewünschten Übersetzungsrichtung wird entweder das Sonnenrad oder der Planetenradträger bzw. das Hohlrad angetrieben.

Häufig ist die erste Stufe des Getriebes bei gattungsgemäßen Windenergieanlagen als Planetenstufe ausgebildet, wobei der Rotor mit dem Planetenradträger oder dem Hohlrad der Planetenstufe und das Sonnenrad, je nachdem ob es sich um ein einstufiges oder ein mehrstufiges Getriebe handelt, mit dem Generator oder mit der nächsten Stufe des Getriebes gekoppelt ist.

Die Kopplung des Rotors über die Rotorwelle mit dem Getriebe kann beispielsweise über den Planetenradträger erfolgen. Hierbei wird der Planetenradträger mittels des Rotors in eine Drehbewegung versetzt. Die in dem Planetenradträger gelagerten Planetenräder werden durch die Drehung des Planetenradträgers zwischen dem, in diesem Fall, gehäusefesten Hohlrad und dem Sonnenrad abgewälzt, wodurch das Sonnenrad ebenfalls in eine Drehbewegung versetzt und damit die nächste Stufe des Getriebes antreibt.

Es besteht aber auch die Möglichkeit, dass das Hohlrad mit der Rotorwelle gekoppelt wird oder dass das Hohlrad fest in einem Hohlradträger angeordnet ist, der wiederum mit der Rotorwelle gekoppelt ist. In diesem Fall wird das Drehmoment über das Hohlrad/ Hohlradträger in das Getriebe eingeleitet. Das Hohlrad treibt die Planetenräder an, die in dem, in diesem Fall, gehäusefesten Planetenradträger gelagert sind. Die Planetenräder werden wiederum zwischen dem Hohlrad und dem Sonnenrad abgewälzt und treiben dadurch das Sonnenrad an.

Das Sonnenrad in einem Windenergiegetriebe stellt das am höchsten belastete Verzahnungsbauteil dar. Gleichzeitig ist es aber aufgrund seiner Einbaulage und der eventuell nachfolgenden Getriebestufen bei einem Schaden nur durch eine teilweise oder sogar komplette Zerlegung des Getriebes daraus zu entfernen, wobei die Zerlegung des Getriebes mit erheblichem Zeitaufwand und hohen Kosten verbunden ist.

Aus der DE 100 43 593 ist bekannt, einen Gehäusedeckel auf der Seite des Getriebes anzuordnen, die mit dem Generator gekoppelt ist. Durch Öffnen des Deckels wird die Möglichkeit geschaffen, z. B. zu Wartungszwecken das Sonnenrad aus dem Getriebe herauszuziehen. Hierbei stellt sich aber das Problem, das aufgrund der engen Raumverhältnisse in einer Windenergieanlage es aus Platzmangel in der Regel nicht möglich ist, das Sonnenrad auf der Generatorseite des Getriebes herauszuziehen.

Aus der DE 296 09 794 ist eine Windenergieanlage bekannt mit einem Getriebe, das mindestens eine Planetenstufe mit einem Sonnenrad aufweist. Das Sonnenrad ist als Achse durch die Frontplatte des Maschinenträgers hindurchragend ausgebildet.

Aufgabe der vorliegenden Erfindung ist eine Windenergieanlage, bei der das Sonnenrad in einfacher, kostengünstiger und schonender Weise in ein Getriebe eingesetzt oder wieder herausgezogen werden kann, ohne dass das Getriebe dafür zerlegt werden muss.

Gelöst wird die Aufgabe mit einer Windenergieanlage, die die kennzeichnenden Merkmale des Anspruchs 1 aufweist sowie eine für diese Windenergieanlage geeignete Vorrichtung mit den Merkmalen des Anspruchs 9.

Erfindungsgemäss ist vorgesehen, dass das Getriebe so ausgebildet ist, dass das Sonnenrad mindestens einer Planetenstufe durch die hohle Rotorwelle, also auf der generatorabgewandten Seite, in die Planetenstufe einsetzbar bzw. aus dieser herausziehbar ist.

Um den Energieertrag einer Windenergieanlage zu verbessern, geht die Entwicklung dahin, dass Windenergieanlagen in ihren Abmessungen, zunehmend grösser ausgelegt werden, um möglichst viel Energie aus dem Wind aufnehmen zu können. Dies hat zur Folge, dass auch der Durchmesser der Rotorwelle zunimmt.

Die Rotorwelle z. B. einer 5 MW-Windenergieanlage wird aus Gewichtsgründen als Hohlwelle ausgeführt und weist einen Aussendurchmesser von 1,45 m und einen Innendurchmesser von ca. 0,70 in auf Der Innendurchmesser der Rotorwelle einer 5 MW-Anlage ist so gross, dass zum Beispiel eine Person die Möglichkeit hat, die Rotorwelle von innen zu "begehen".

Gemäss der vorliegende Erfindung wird die Möglichkeit die Rotorwelle von innen zu "begehen" auf vorteilhafte Weise zur Schaffung einer bislang nicht bekannten Zugangsmöglichkeit zum Getriebe genutzt.

Bei bekannten Windenergieanlagen erfolgte der Zugang, wenn überhaupt ein Zugang zum Getriebe vorgesehen war, in der Regel von der Generatorseite des Getriebes. Es gibt zwar auch bislang schon als Hohlwelle ausgebildete Rotorwellen, diese wurden allerdings immer möglichst klein dimensioniert, um ein optimiertes Tragverhalten der, z.B. die Rotorwelle tragenden Lager zu erreichen.

Auch gab es im Zusammenhang mit hohlen Rotorwellen Windenergieanlagen, die Zugangsöffnungen zum Getriebe aufwiesen, hierbei handelt es sich jedoch um Inspektionsöffnungen, durch die Endoskope in das Getriebe eingeführt werden, um den Zustand der einzelnen Getriebezähne zu überprüfen. Es wurde im Hinblick auf die bislang eingesetzten Rotorwellen, über einen rotorseitigen Zugriff auf das Getriebe in der Fachwelt bislang nicht wirklich nachgedacht.

Im Rahmen der Erfindung sind eine Reihe vorteilhafter Ausgestaltungen möglich. In einer vorteilhaften Ausgestaltung der Erfindung ist beispielsweise vorgesehen, die Windenergieanlage so auszubilden, dass eine Trenneinrichtung vorgesehen ist, über die das Sonnenrad vom übrigen Getriebe trennbar ist, wobei in einer besonders bevorzugten Ausgestaltung vorgesehen ist, dass die Trenneinrichtung von der Rotorwelle aus betätigbar ist.

Bei Getrieben, die mehr als eine Stufe aufweisen oder auch bei einstufigen Getrieben, bei denen die Verbindung zwischen z.B. Sonnenrad und Generator im Getriebegehäuse liegt, die Verbindung des Sonnenrads mit der nachfolgenden Stufe oder dem Generator nur mühevoll zu erreichen und demzufolge ist es auch nicht einfach diese Verbindung zu lösen. Häufig geht dies sogar nur, nachdem andere Teile des Getriebes vorab ausgebaut werden. Diese Problematik wird mit der oben beschriebenen Ausgestaltung vorteilhaft gelöst.

Als Trenneinrichtung kann eine Steckverbindung, wie beispielsweise eine Bogenzahnkupplung verwendet werden, wobei zusätzlich Mittel vorgesehen werden müssen, um eine Axialbewegung des Sonnenrades zu verhindern. Hierzu kann beispielsweise die, als Stabwelle ausgebildete Abtriebsseite des Sonnenrads einen Verbindungsflansch aufweisen, der mit der Bogenzahnkupplung lösbar verbindbar ist, beispielsweise über eine flexible Schraubenverbindung. Dabei muss der Durchmesser des Verbindungsflansch mindestens so gross sein, dass die Schraubenverbindung von der Rotorwelle aus mittels eines entsprechenden Werkzeugs herstellbar ist. Gleichzeitig darf der Durchmesser des Verbindungsflansches nicht grösser als der Durchmesser des Sonnenrads sein, damit der Verbindungsflansch bei Herausnahme des Sonnenrads ebenfalls über die Zugangsöffnung aus dem Getriebe herausnehmbar ist.

Diese Ausgestaltung der Erfindung bietet den Vorteil, dass es nunmehr möglich ist, das Sonnenrad ausgehend von der Rotorwelle vom Getriebe zu trennen und es herauszunehmen oder wieder einzusetzen und mit dem Getriebe zu verbinden. Umständliche Demontagearbeiten wie zum Beispiel im schlimmsten Fall eine teilweise Zerlegung des Getriebes sind nicht mehr erforderlich.

Erfindungsgemäss ist der Zugriff auf das Getriebe zum Beispiel so ausgebildet, dass das Getriebe eine Zugangsöffnung aufweist. Dieses Merkmal ermöglicht auf eine sehr einfache und kostengünstige Weise, dass eine Person, nachdem sie zum Beispiel über die Rotornabe in die hohle Rotorwelle und durch die hohle Rotorwelle, zu dem Getriebe gelangt ist, durch die Zugangsöffnung auf das Sonnenrad der Planetenstufe zugreifen kann, um es zum Beispiel zu Reparatur- oder Wartungszwecken herauszunehmen.

Die Anordnung und Grösse der Zugangsöffnung im Getriebe kann beliebig sein, sie muss lediglich so gewählt werden, dass ein Zugriff von der Rotorwelle auf das Sonnenrad möglich ist. Es bietet sich jedoch an, gemäß einer vorteilhaften Ausgestaltung der Erfindung die Zugangsöffnung zentrisch zum Sonnenrad auszurichten.

Gemäss einer weiteren vorteilhaften Ausgestaltung der Erfindung ist vorgesehen, dass die erste Stufe des Getriebes eine Planetenstufe ist, deren Planetenradträger mit der hohlen Rotorwelle gekoppelt ist. Der Planetenradträger kann zum Beispiel so ausgebildet sein, dass er auf seiner der Rotorwelle zugewandten Seite einen Flansch aufweist, der mit der Rotorwelle koppelbar ist, wobei der Innendurchmesser des Flansches auf vorteilhafte Weise mindestens dem Innendurchmesser der hohlen Rotorwelle entspricht. Es wäre aber auch denkbar, sofern die räumlichen Abmessungen in der Windenergieanlage das zulassen, den Innendurchmesser grösser zu wählen, um ein grösstmöglichen Arbeitsbereich für Arbeiten im Bezug auf das Sonnenrad zu ermöglichen. Ebenfalls vorstellbar ist, dass die Rotorwelle und der Planetenradträger einstückig als ein Bauteil ausgebildet sind.

In einer weiteren vorteilhaften Ausgestaltung der Erfindung ist vorgesehen, dass der Planetenradträger die im Getriebe vorgesehene Zugangsöffnung zu dem Sonnenrad aufweist. Diese kann beispielsweise am Fusse des Flansches, zentrisch zum Sonnenrad angeordnet sein.

Der Vorteil der beiden oben beschriebenen Ausgestaltungen ist, dass auf einfache und kostengünstige Weise durch entsprechende Ausbildung des Planetenradträgers ein Zugang zum Sonnenrad geschaffen wird. Weiterhin vorteilhaft ist, dass im Hinblick auf die sehr aufwendigen Getriebekonstruktionen bei Windenergieanlagen, mit der vorliegenden Erfindung der Zugang zu dem Sonnenrad auch bei vorhandenen Getriebekonstruktionen auf sehr einfache Weise integrierbar ist, da nur der Planetenradträger konstruktiv angepasst werden muss, alle übrigen Bauteile des Getriebes können im wesentlichen unverändert übernommen werden.

Selbstverständlich ist es aber auch denkbar, dass das Hohlrad so ausgebildet ist, dass es mit der Rotorwelle gekoppelt ist oder dass das Hohlrad in einem Hohlradträger angeordnet, der dann mit der Rotorwelle gekoppelt ist und das die Zugangsöffnung entsprechend im Hohlrad und/ oder Hohlradträger angeordnet ist.

Vorzugsweise ist vorgesehen, dass das Getriebe mindestens eine weitere Zugangsöffnung aufweist, die einen Zugriff auf ein Planentenrad ermöglicht. Diese Ausgestaltung bietet den Vorteil, dass ein Planetenrad zu Reparatur- und Wartungszwecken ebenfalls auf einfache Weise herausgenommen und wieder eingesetzt werden kann.

Erfindungsgemäss ist vorgesehen, dass mindestens eine der Zugangsöffnungen verschliessbar ausgebildet ist. Dieses

Merkmal verhindert, dass, der für den sicheren Betrieb des Getriebes notwendige Schmierstoff nicht über die Zugangsöffnung aus dem Getriebe in die hohle Rotorwelle gelangen und dort zu Verschmutzungen führen kann.

Erfindungsgemäss ist vorgesehen, die Zugangsöffnung mittels eines Deckels zu verschliessen, wobei der Deckel zum Beispiel über Schrauben an dem Planetenradträger befestigt wird.

Wie oben bereits beschrieben, kann eine Person durch die hohle Rotorwelle zum Getriebe gelangen und kann dann entsprechend auf das Sonnenrad zugreifen. Auch wenn diese Vorgehensweise eine erhebliche Verbesserung gegenüber dem Stand der Technik bedeutet, bei dem zum Teil das komplette Getriebe demontiert werden muss, so ist es auch bei der beanspruchten Windenergieanlage, besonders im Hinblick auf die doch recht beengten Verhältnisse in der Rotorwelle umständlich, das Sonnenrad aus dem Getriebe zu entnehmen.

Um das Herausnehmen des Sonnenrades aus dem Getriebe einer Windenergieanlage zusätzlich zu vereinfachen, umfasst die vorliegende Erfindung daher weiterhin eine Vorrichtung, die so ausgebildet ist, das sie in der Rotorwelle vor dem Getriebe anordenbar ist, eine Kopplungseinrichtung aufweist, die in einen kraftübertragenden Eingriff mit dem Sonnenrad dergestalt bringbar ist, dass das Sonnenrad aus dem Getriebe herausgezogen werden kann bzw. in das Getriebe eingesetzt werden kann, wobei die Vorrichtung so ausgebildet ist, dass das Sonnenrad durch die Vorrichtung gehalten werden kann.

Die erfindungsgemäße Vorrichtung bietet den Vorteil, dass eine Person beispielsweise zu Reparaturzwecken, nicht mehr manuell das Sonnenrad entnehmen muss, sondern das hierfür die Vorrichtung benutzt wird.

Gemäss einer weiteren vorteilhaften Ausgestaltung der Erfindung kann die Vorrichtung eine Verstelleinrichtung aufweisen, über die das in Krafteingriff mit der Kopplungseinrichtung befindliche Sonnenrad aus dem Getriebe herausgezogen werden kann bzw. in das Getriebe eingesetzt werden kann.

In einer bevorzugten Ausgestaltung der Erfindung ist vorgesehen, dass die Vorrichtung eine Arretierungseinrichtung aufweist, durch die die Vorrichtung in der Rotorwelle vor dem Getriebe ortsfest anordenbar ist um somit ein verschieben der Vorrichtung bei der Entnahme des Sonnenrades zu verhindern.

Zusätzlich kann die Vorrichtung gemäss einer weiteren Ausgestaltung der Erfindung Mittel zum Justieren aufweisen, mit denen die Position der Vorrichtung insgesamt und/ oder die Positionen einzelner Einrichtungen der Vorrichtung zum Getriebe ausrichtbar sind.

Eine genaue Ausrichtung der Vorrichtung zum Getriebe, insbesondere zum Sonnenrad bietet den Vorteil, dass das Herausnehmen des Sonnenrad durch das Vorsehen von Justiermitteln vereinfacht wird, da auf diese Weise die Möglichkeit eines Verkanten des Sonnenrads beim Herausnehmen minimiert werden kann. Gleiches gilt für den Fall, dass das Sonnenrad in das Getriebe eingesetzt werden soll.

Dabei können zum einen Mittel zum Justieren vorgesehen sein, über die nur die Position der Vorrichtung zum Getriebe ausrichtbar ist, wobei die Mittel so ausgebildet sein können, dass eine Positionsausrichtung der Vorrichtung zu allen Achsen, sowohl translatorisch als auch rotatorisch möglich ist.

Zum anderen können zum Zwecke der Ausrichtung aber auch Mittel zum Justieren vorgesehen sein, durch die die Position einzelner Einrichtungen der Vorrichtung zum Getriebe ausrichtbar sind, wobei auch diese Mittel so ausgebildet sein können, dass eine Positionsausrichtung zu allen Achsen möglich ist.

Es ist aber auch denkbar, dass eine Ausrichtung sowohl über die Mittel zum Justieren der Vorrichtung als auch über die Mittel zum Justieren einzelner Einrichtungen der Vorrichtung erfolgen kann. Beispielsweise kann über die Mittel zum Justieren der Vorrichtung eine Grobjustierung und über die Mittel zum Justieren der Einrichtungen eine anschließende Feinjustierung, oder umgekehrt erfolgen.

Insbesondere bei grossen Windenergieanlagen sind die einzelnen Bauteile entsprechend schwer, so auch das Sonnenrad. Bei einer 5MW- Anlage wiegt ein Sonnenrad zum Beispiel ca. 80 kg. Für eine einzelne Person ist es demgemäss sehr schwierig ein solches Sonnenrad durch die Rotorwelle aus der Windenergieanlage zu entnehmen.

In einer vorteilhaften Ausgestaltung der Erfindung ist daher vorgesehen, dass die Vorrichtung zusätzlich eine Transporteinrichtung zum Transport des Sonnenrads an einen von aussen zugänglichen Bereich in der Rotorwelle aufweist.

Im folgenden soll die Erfindung anhand eines Ausführungsbeispiels im Detail erläutert werden. Die Figur zeigt eine Schnittansicht des Kopplungsbereichs einer Rotorwelle mit einer ersten Stufe eines mehrstufigen Getriebes in einer Windenergieanlage.

Dargestellt ist das antreibende Ende einer hohlen Rotorwelle 1, die mit einer ersten Stufe 2 eines Getriebes gekoppelt ist. Das andere, nicht dargestellte Ende der Rotorwelle 1 ist mit einem Rotor gekoppelt, der durch Windenergie in eine Drehbewegung versetzbar ist. Das über den Rotor erzeugte Antriebsmoment wird über die Rotorwelle 1 in das Getriebe eingeleitet.

Bei der ersten Stufe des Getriebes handelt es sich um eine Planetenstufe 2. Die Planetenstufe 2 besteht im wesentlichen aus den folgenden Komponenten: einem Sonnenrad 3, Planetenrädem 4, 5, einem Planetenradträger 6 und einem Hohlrad 7.

Die Kopplung der Rotorwelle 1 mit der Planetenstufe 2 erfolgt in dem dargestellten Ausführungsbeispiel über den Planetenradträger 6. Der Planetenradträger 6 weist auf seiner Rotorseite einen Flansch 6' auf, der eine Verbindung mit der Rotorwelle ermöglicht, wobei es sich bei der dargestellten Verbindungsform um eine Schraubenverbindung handelt.

In dem Planetenradträger 6 sind die Planetenräder 4, 5 gelagert, die einen äusseren Zahnkranz aufweisen. Die Planetenräder 4, 5 sind um ein Sonnenrad 3 angeordnet, wobei das Sonnenrad 3 ebenfalls einen Außenverzahnung aufweist, der mit dem Außenverzahnung der Planetenräder kämmt.

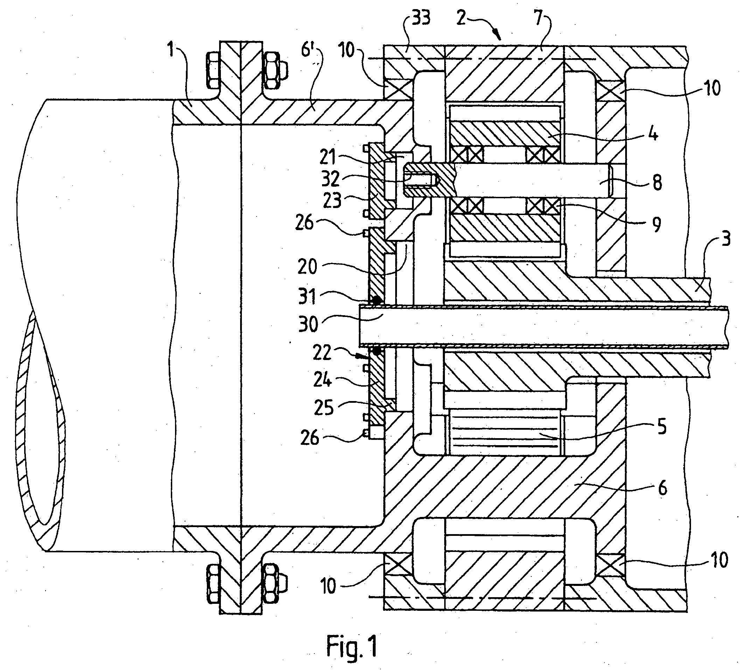

Im allgemeinen weist eine Planetenstufe drei oder vier Planetenräder 4, 5 auf, wobei im dargestellten Ausführungsbeispiel drei Planetenrädern vorgesehen sind, die um jeweils 120° versetzt um das Sonnenrad 3 angeordnet sind. Aufgrund der gewählten Schnittansicht sind in der Fig 1 jedoch nur zwei Planetenräder 4, 5 sichtbar, wobei das oben angeordnete Planetenrad 4 in der Schnittebene angeordnet ist und das unten angeordnete Planetenrad 5 aufgrund seiner um 120° versetzten Lage zum Planetenrad 4 nicht in der Schnittebene angeordnet ist.

In dem dargestellten Ausführungsbeispiel erfolgt die Lagerung der Planetenräder 4, 5 in dem Planetenradträger 6 über Planetenbolzen 8 und vier Lager 9, wobei die Planetenbolzen 8 gehäusefest in dem Planetenradträger 6 angeordnet sind. Bei den Lagern 9 kann es sich zum Beispiel um Kugellager oder Wälzlager handeln, es wäre aber auch denkbar, Gleitlager zu verwenden.

Das Hohlrad 7 ist in einem Getriebegehäuse 33 gehäusefest angeordnet, wobei das Hohlrad 7 so ausgebildet ist, dass es eine Innenverzahnung aufweist, die ebenfalls mit der Außenverzahnung der Planetenräder 4, 5 kämmt. In dem Hohlradträger 33 ist weiterhin der Planetenradträger 6 über Lager 10 gehäusefest gelagert.

Wird der Rotor durch den Wind angetrieben, so wird der Planetenradträger 6 über die Rotowelle 1 in eine Drehbewegung versetzt. Aufgrund der gehäusefesten Lagerung der Planetenbolzen 8 in dem Planetenradträger 6 werden die Planetenräder 4, 5 zwischen dem gehäusefesten Hohlrad 7 und dem Sonnenrad 3 abgewälzt, wodurch das Sonnenrad 3, ebenfalls in eine Drehbewegung versetzt wird. Vom fliegend zwischen den Planetenrädern 4, 5 zentrierten Sonnenrad 3 wird das erzeugte Drehmoment dann auf die nächste Stufe des Getriebes übertragen.

Zusätzlich ist in dem Getriebe zentrisch ein Kabelrohr 30 angeordnet, durch das die elektrischen Leitungen aus dem Inneren der Windenergieanlage zum Rotor geführt werden.

Um zu Wartungs- oder Reparaturzwecken das Sonnenrad aus der Planetenstufe herausnehmen und wieder einsetzen zu können, weist der Planetenradträger 6 eine Zugangsöffnung 20 auf. Die Zugangsöffnung 20 ist zentriert zum Sonnenrad 3 ausgerichtet und ihre Ausmasse sind so gewählt, dass das Sonnenrad 3 über diese Zugangsöffnung 20 aus der Planetenstufe 2 herausgezogen bzw. eingesetzt werden kann.

Zusätzlich kann der Planetenradträger 6 noch eine zweite Zugangsöffnung 21 bzw. in Abhängigkeit von der Anzahl der Planetenräder weitere Zugangsöffnungen aufweisen, wobei die weiteren Zugangsöffnungen so angeordnet und ausgebildet sein können, dass auch die Planetenräder 4, 5 in einfacher Weise aus der Planetenstufe 2 entfernt bzw. wieder einsetzbar sind. In dem dargestellten Ausführungsbeispiel ist die Zugangsöffnung 21 so angeordnet und ausgebildet, dass ermöglicht wird, den Planetenbolzen 8 aus dem Planetenradträger herauszuziehen, zum Beispiel mit einem an der Gewindebohrung 32 angreifenden, nicht dargestellten Abzieher. Nachdem das Sonnenrad und der Planetenbolzen 8 aus der Planetenstufe 2 herausgenommen wurden, kann das Planetenrad 4, ebenfalls über die Zugangsöffnung 20 aus der Planetenstufe herausgenommen werden.

Um zu verhindern, dass für die Schmierung des Getriebes notwendige Schmiermittel in die Rotorwelle 1 gelangen, sind in dem dargestellten Ausführungsbeispiel die Zugangsöffnungen 20, 21 mit Deckeln 22, 23 verschlossen.

In dem dargestellten Ausführungsbeispiel bestehen die Deckel 22, 23 aus einer kreisförmigen Abdeckplatte, die auf einer Seite einen Absatz 25 aufweisen, der im verschlossenen Zustand in die Zugangsöffnung 21 ragt. Um ein öldichtes Verschliessen zu erreichen kann der Absatz so ausgebildet sein kann, das er formschlüssig in die Zugangsöffnung einsetzbar ist. Vorstellbar ist aber auch, dass in dem Absatz eine Nut vorgesehen werden kann, in die eine Dichtung eingesetzt wird.

Der Deckel 22 weist zudem eine Öffnung auf, durch die das Kabelrohr 30 aus dem Getriebe hinausgeführt wird, wobei in dem dargestellten Ausführungsbeispiel das Kabelrohr mit dem Getriebe dreht.

Die Deckel 22, 23 können im einfachsten Fall nur aus einer Deckplatte bestehen, deren Ausmasse so gewählt sind, dass die Zugangsöffnungen 20, 21 damit verschlossen sind. Zu Dichtungszwecken kann zwischen Platte und Planetenradträger 6 zusätzlich eine Dichtung vorgesehen sein. Denkbar wäre auch, zusätzlich eine Nut in die Deckplatte einzuarbeiten, in die die Dichtung eingesetzt werden kann.

Auch die Befestigung des Deckels 22, 23 an dem Planetenradträger 6 kann auf unterschiedliche Weise erfolgen. In dem dargestellten Ausführungsbeispiel erfolgt die Befestigung zwischen den Deckeln 22, 23 und dem Planetenradträger 6 über Schrauben 26. Die Befestigung der Deckel 22, 23 könnte beispielsweise aber auch über Klemmgriffe erfolgen. Denkbar wäre auch, an dem Deckel 22, 23 und/ oder an dem Planetenradträger 6 Verbindungseinrichtungen vorzusehen, die beim Einsetzen des Deckels zum Beispiel durch Einrasten eine feste Verbindung erzeugen. Dies hätte den Vorteil, dass für das Einsetzen des Deckels nur wenige Handgriffe erforderlich sind. In diesem Zusammenhang wäre auch denkbar, die Deckel über Scharniere mit dem Planetenradträger zu verbinden.

Die nicht dargestellte ebenfalls durch die Erfindung abgedeckte Vorrichtung zum Herausnehmen oder Einsetzen des Sonnenrads kann beispielsweise als Wagen ausgebildet sein, der durch die Rotorwelle zum Getriebe gefahren wird. Auf dem Wagen und an dem Planetenradträger können Arretierungsmittel vorgesehen sein, um dem Wagen im Kopplungsbereich zu ortsfest anzuordnen.

Zusätzlich kann auf dem Wagen eine Kopplungseinrichtung vorgesehen sein, um den Wagen mit dem Sonnenrad zu verbinden. Die Kopplungseinrichtung kann in ihrer einfachsten Ausführungsform beispielsweise Gewindestangen aufweisen, wobei diese entsprechend dimensioniert sein müssen, um das Gewicht des Sonnenrades tragen zu können. Die Gewindestangen können in, im Sonnenrad vorgesehenen Gewindebohrungen eingeschraubt werden. Zu Justierzwecken können beispielsweise die Räder des Wagens höhenverstellbar ausgebildet sein. Zusätzlich könnte zum Beispiel die Kopplungseinrichtung so ausgebildet sein, dass sie bezüglich ihrer rotatorischen Achsen verstellbar ausgebildet ist.

Zum Herausziehen des Sonnenrads, kann die Verstelleinrichtung der Vorrichtung zum Beispiel Schienen aufweisen, auf denen die Kopplungseinrichtung geführt angeordnet sein kann, wobei die Schienen axial zum Sonnenrad auf dem Wagen angeordnet sind.

Für den Kopplungsvorgang wird die Kopplungseinrichtung im vorderen, zum Getriebe ausgerichteten Bereich des Wagens angeordnet. Nachdem der Wagen und das Sonnenrad über die Gewindestangen miteinander verbunden worden sind, wird das Sonnenrad durch Zurückziehen der auf den Schienen geführten Kopplungseinrichtung aus dem Getriebe heraus auf den Wagen gezogen. Anschließend kann das nunmehr auf dem Wagen angeordnete Sonnenrad durch die Rotorwelle zum Beispiel zum Rotor geschoben werden, um das Sonnenrad im Rotor zu warten oder auszutauschen.

Denkbar wäre aber auch, dass nachdem die Kopplungseinrichtung mit dem Sonnenrad verbunden worden ist, das Sonnenrad durch Zurückziehen der Vorrichtung insgesamt aus dem Getriebe herausgezogen wird.

Für den Fall, dass das Sonnenrad eine Schrägverzahnung aufweiset, kann die Verstelleinrichtung zusätzlich noch Mittel aufweisen, durch die das Sonnenrad beim Herausziehen entsprechend der Schrägverzahnung aus dem Getriebe herausgedreht werden kann.

Es wäre auch denkbar, die Vorrichtung so weiterzubilden, dass auch die Planetenräder mittels der Vorrichtung aus der Planetenstufe entnehmbar sind. Beispielsweise könnte nachdem das Sonnenrad entfernt worden ist, eine Hubeinrichtung über die Zugangsöffnung 20 in das Getriebe eingeführt werden, die bis zu dem Planetenrad ausfahrbar ist. Anschliessend wird der Planetenbolzen entfernt, die Hubvorrichtung eingefahren und das Planetenrad aus dem Getriebe herausgezogen.

## Patentansprüche

1. Windenergieanlage mit einem Rotor, einem Getriebe, das über eine hohle Rotorwelle (1) mit dem Rotor gekoppelt ist, sowie einem Generator, der in Antriebsverbindung mit dem Getriebe steht, wobei das Getriebe mindestens eine als eine Planetenstufe (2) ausgebildete Stufe aufweist, die im wesentlichen ein Sonnenrad (3), mindestens ein Planetenrad (4, 5), einen Planetenradträger (6) und ein Hohlrad (7) aufweist, wobei das Getriebe so ausgebildet ist, dass das Sonnenrad (3) mindestens einer Planetenstufe (2) durch die hohle Rotorwelle (1) in die Planetenstufe (2) einsetzbar bzw. aus dieser herausziehbar ist, wobei das Getriebe eine Zugangsöffnung (20) aufweist, die einen Zugriff von der Rotorwelle (1) auf das Sonnenrad ermöglicht und deren Ausmasse so gewählt sind, dass das Sonnenrad über diese Zugangsöffnung aus der Planetenstufe herausgezogen bzw. eingesetzt werden kann, **dadurch gekennzeichnet, dass** die Zugangsöffnung (20, 21) mit einem Deckel verschließbar ausgebildet ist.

2. Windenergieanlage nach Anspruch 1, **dadurch gekennzeichnet, dass** das Sonnenrad (3) über eine Trenneinrichtung vom übrigen Getriebe oder vom Generator trennbar ist.

3. Windenergieanlage nach Anspruch 2, **dadurch gekennzeichnet, dass** die Trenneinrichtung so ausgebildet ist, dass sie von der Rotorwelle (1) aus bedienbar ist.

4. Windenergieanlage nach Anspruch 1, **dadurch gekennzeichnet, dass** die Zugangsöffnung (20) zentrisch zum Sonnenrad ausgerichtet ist.

5. Windenergieanlage nach einem der vorhergehenden Ansprüche, **dadurch gekennzeichnet, dass** das Getriebe mehrere Stufen aufweist von der die erste Stufe des Getriebes als Planetenstufe (2) ausgebildet ist, deren Planetenradträger (6) mit der hohlen Rotorwelle (1) gekoppelt ist.

6. Windenergieanlage nach Anspruch 5, **dadurch gekennzeichnet, das** der Planetenradträger (6) die im Getriebe vorgesehene Zugangsöffnung (20) aufweist.

7. Windenergieanlage nach Anspruch 1, **dadurch gekennzeichnet, dass** das Getriebe mindestens eine weitere Zugangsöffnung (21) aufweist, die einen Zugriff auf ein Planetenrad (4) ermöglicht.

8. Windenergieanlage nach einem der vorhergehenden Ansprüche, **dadurch gekennzeichnet, dass** das Verschließen der Zugangsöffnung (20, 21) über einen Deckel (22, 23) erfolgt.

## Claims

1. Wind turbine having a rotor, a gear mechanism, which is coupled to the rotor via a hollow rotor shaft (1), and a generator, which is in drive connection with the gear mechanism, wherein the gear mechanism has at least one stage configured as a planetary stage (2), which has substantially a sun gear (3), at least one planetary gear (4, 5), a planetary-gear carrier (6) and a ring gear (7), wherein the gear mechanism is configured such that the sun gear (3) of at least one planetary stage (2) is able to be engaged in or disengaged from the planetary stage (2) by the hollow rotor shaft (1), wherein the gear mechanism has an access opening (20) which allows access of the rotor shaft (1) to the sun gear and the dimensions of which are selected such that the sun gear can be disengaged from or engaged in the planetary stage via this access opening, **characterized in that** the access opening (20, 21) is configured to be closable by a cover.

2. Wind turbine according to Claim 1, **characterized in that** the sun gear (3) is separable from the rest of the gear mechanism or from the generator via a separating device.

3. Wind turbine according to Claim 2, **characterized in that** the separating device is configured such that it is operable from the rotor shaft (1).

4. Wind turbine according to Claim 1, **characterized in that** the access opening (20) is aligned centrally with respect to the sun gear.

5. Wind turbine according to one of the preceding claims, **characterized in that** the gear mechanism has a plurality of stages, of which the first stage of the gear mechanism is configured as a planetary stage (2), the planetary-gear carrier (6) of which is coupled to the hollow rotor shaft (1).

6. Wind turbine according to Claim 5, **characterized in that** the planetary-gear carrier (6) has the access opening (20) provided in the gear mechanism.

7. Wind turbine according to Claim 1, **characterized in that** the gear mechanism has at least one further access opening (21), which allows access to a planetary gear (4).

8. Wind turbine according to one of the preceding claims, **characterized in that** the access opening (20, 21) is closed via a cover (22, 23).

## Revendications

1. Éolienne avec un rotor, un engrenage, qui est couplé avec le rotor par l'intermédiaire d'un arbre de rotor creux (1), ainsi qu'un générateur qui est en liaison d'entraînement avec l'engrenage, l'engrenage comprenant au moins un étage conçu comme un étage planétaire (2), qui comprend essentiellement une roue solaire (3), au moins une roue planétaire (4, 5), un support de roue planétaire (6) et une roue à denture intérieure (7), l'engrenage étant conçu de façon à ce que la roue solaire (3) d'au moins un étage planétaire (2) puisse être insérée dans l'étage planétaire (2) à travers l'arbre de rotor creux (1) ou puisse être retirée de celui-ci, l'engrenage comprenant une ouverture d'accès (20) qui permet un accès de l'arbre de rotor (1) à la roue solaire et dont les dimensions sont choisies de façon à ce que la roue solaire puisse être retirée ou insérée dans l'étage planétaire par cette ouverture d'accès, **caractérisée en ce que** l'ouverture d'accès (20, 21) est conçue de manière refermable avec un couvercle.

2. Éolienne selon la revendication 1, **caractérisée en ce que** la roue solaire (3) peut être séparée du reste de l'engrenage ou du générateur par un dispositif de séparation.

3. Éolienne selon la revendication 2, **caractérisée en ce que** le dispositif de séparation est conçu de façon à ce qu'il puisse être commandé à partir de l'arbre de rotor (1).

4. Éolienne selon la revendication 1, **caractérisée en ce que** l'ouverture d'accès (20) est orientée de manière centrale par rapport à la roue solaire.

5. Éolienne selon l'une des revendications précédentes, **caractérisée en ce que** l'engrenage comprend plusieurs étages dont le premier étage de l'engrenage est conçu comme un étage planétaire (2), dont le support de roue planétaire (6) est couplé avec l'arbre de rotor creux (1).

6. Éolienne selon la revendication 5, **caractérisée en ce que** le support de roue planétaire (6) comprend l'ouverture d'accès (20) prévue dans l'engrenage.

7. Éolienne selon la revendication 1, **caractérisée en ce que** l'engrenage comprend au moins une ouverture d'accès supplémentaire (21) qui permet un accès à une roue planétaire (4).

8. Éolienne selon l'une des revendications précédentes, **caractérisée en ce que** la fermeture de l'ouverture d'accès (20, 21) a lieu par l'intermédiaire d'un couvercle (22, 23).
